# EUROPÄISCHE PATENTSCHRIFT

(11) **EP 2 527 704 B1**
(45) Veröffentlichungstag und Bekanntmachung des Hinweises auf die Patenterteilung: **03.09.2014**
(21) Anmeldenummer: 12001340.4
(22) Anmeldetag: 29.02.2012
(51) Int. Cl.: F16L 53/00

(54) **Verbinder für eine Fluidleitung und Fluidleitung**
Connector for a fluid conduit and fluid conduit
Connecteur pour une conduite de fluide et conduite de fluide

(30) Priorität: 20.05.2011 DE 102011102154
(43) Veröffentlichungstag der Anmeldung: 28.11.2012
(73) Patentinhaber: NORMA Germany GmbH, 63477 Maintal (DE)
(72) Erfinder: Eckardt, Carsten, 63486 Bruchköbel (DE); Seibel, Knut, 63674 Altenstadt (DE); Jacksteit, Bruno, 63546 Hammersbach (DE); Read, Cameron, 63454 Hanau (DE); Bauer, Andreas, 63785 Obernburg (DE); Mann, Stephan, 63599 Biebergemünd (DE)
(74) Vertreter: Knoblauch, Andreas

(56) Entgegenhaltungen:
- EP-A1- 0 564 990
- EP-A1- 1 818 588
- EP-A2- 0 068 688
- EP-A2- 1 070 642
- WO-A1-00/77440
- WO-A1-2008/023021
- DE-A1- 3 414 284
- US-A- 5 411 300
- PARKER HANNIFIN CORPORATION, O-RING DIVISION: 'Parker O-Ring Handbook', [Online] 2007, CLEVELAND, OH, Gefunden im Internet: <URL:http://www.parker.com/literature/ORD%2 05700%20Parker_O-Ring_Handbook.pdf> [gefunden am 2013-05-21]

## Beschreibung

Die Erfindung betrifft einen Verbinder für eine Fluidleitung mit einem Gehäuse, das einen Anschlussstutzen, der mit einem Rohr verbindbar ist, und eine Verbindungsgeometrie, die mit einem Gegenelement verbindbar ist, aufweist, wobei das Gehäuse eine Austrittsöffnung aufweist, durch die mindestens ein Hilfselement aus dem Gehäuse nach außen geführt ist, wobei das Hilfselement durch einen elastomeren Körper geführt ist.

Ferner betrifft die Erfindung eine Fluidleitung mit einem derartigen Verbinder.

Ein derartiger Verbinder ist aus EP 0 068 688 A2 bekannt. Hier ist das Hilfselement als Heizstab ausgebildet, dessen Anschlüsse mit einer Vergussmasse vergossen sind. Die Vergussmasse ist in einem Gehäuse angeordnet, das in einer Austrittsöffnung durch einen O-Ring abgedichtet ist. Ein weiterer Verbinder ist aus EP 1 070 642 A2 bekannt.

Die Erfindung wird im Folgenden anhand einer Anwendung in einem Kraftfahrzeug beschrieben. Sie ist aber auch bei anderen Fluidleitungen und Verbindern anwendbar.

Bei einem Kraftfahrzeug ist es vielfach erforderlich, ein Fluid, insbesondere eine Flüssigkeit, von einem Vorratsbehälter zu einer Verbrauchsstelle zu transportieren. Ein Beispiel hierfür ist Harnstoff (Urea), der in Verbindung mit Dieselmotoren verwendet wird, um Stickoxide zu reduzieren. Eine derartige Fluidleitung verbindet den Tank mit der Verbrauchsstelle. Zumindest an ihren beiden Enden ist sie vielfach mit einem Verbinder versehen, mit dessen Hilfe eine Verbindung zwischen der Fluidleitung und dem Tank bzw. einer Pumpe hergestellt werden kann. Der Tank und die Pumpe weisen dann ein Gegenelement, beispielsweise einen Stutzen auf, der mit der Verbindungsgeometrie in Eingriff gebracht werden kann. Das Rohr, das auch als Schlauch oder andere Leitung ausgebildet sein kann, ist über den Anschlussstutzen mit dem Gehäuse des Verbinders verbunden.

Bei einigen Anwendungsfällen möchte man eine vorgegebene Einrichtung im Innern der Fluidleitung haben. Diese Einrichtung muss allerdings mit der Außenwelt kommunizieren, so dass es notwendig ist, ein Hilfselement, das mit der Einrichtung verbunden ist oder sogar diese Einrichtung bildet, aus der Fluidleitung herauszuführen. Ein Beispiel für eine derartige Einrichtung ist eine Heizeinrichtung. Es kann sich bei der Einrichtung aber auch um einen Sensor handeln, der beispielsweise Druck, Temperatur, Strömungsgeschwindigkeit, Viskosität oder dergleichen eines Mediums innerhalb der Fluidleitung ermittelt.

Das Fluid in der Fluidleitung steht vielfach unter einem Druck, der größer ist als der Druck in der Umgebung der Fluidleitung. Dies führt zu dem Risiko einer Leckage an der Stelle, wo das Hilfselement aus der Fluidleitung herausgeführt ist.

Der Erfindung liegt die Aufgabe zugrunde, ein Hilfselement aus der Fluidleitung herauszuführen, wobei das Risiko einer Leckage klein sein soll.

Diese Aufgabe wird bei einem Verbinder der eingangs genannten Art unter Anderem dadurch gelöst, dass sich der elastomere Körper bei einer Druckbeaufschlagung parallel zur Durchtrittsrichtung des Hilfselements durch den elastomeren Körper senkrecht zur Durchtrittsrichtung ausdehnt.

Man wählt also zunächst einmal den Verbinder als das Element, durch das man das Hilfselement aus dem Innern der Fluidleitung nach außen führt. Das Gehäuse des Verbinders wird in diesem Zusammenhang als stabil genug angesehen, um die notwendigen Dichtungskräfte aufbringen zu können. Im Gehäuse ist eine Austrittsöffnung vorgesehen, durch die das Hilfselement abgedichtet geführt ist. Für die Abdichtung wird ein spezieller elastomerer Körper gewählt, der aufgrund einer Eigenspannung bereits mit einer gewissen Dichtigkeit sowohl am Rand der Austrittsöffnung, also einem die Austrittsöffnung umgebenden Abschnitt des Gehäuses, als auch am Hilfselement anliegt. Um die Dichtigkeit auch bei größeren Drücken im Innern der Fluidleitung sicherzustellen, hat der elastomere Körper, der die Dichtung bildet, die Eigenschaft, dass er bei einer "axialen" Kompression, also einer Kompression parallel zur Durchtrittsrichtung, eine radiale Expansion zeigt, so dass er sich sowohl zu dem Gehäuseabschnitt, der die Austrittsöffnung umgibt, als auch zum Hilfselement hin ausdehnt. Je größer der Druck im Innern der Fluidleitung ist, desto größer sind entsprechend auch die Kräfte, die den elastomeren Körper an den Rand der Austrittsöffnung und an das Hilfselement pressen. Die Dichtigkeit steigt also mit zunehmendem Druck an. Das Risiko einer Leckage wird daher auch bei größeren Drücken klein gehalten.

Bevorzugterweise ist vorgesehen, dass der elastomere Körper durch eine Halteeinrichtung in der Austrittsöffnung gehalten ist. Die Halteeinrichtung dient dazu, die bei höheren Drücken im Innern der Fluidleitung auf den elastomeren Körper wirkenden Kräfte aufzunehmen, so dass der elastomere Körper tatsächlich parallel zur Durchtrittsrichtung komprimiert werden kann und nicht nach außen ausweicht. Man entkoppelt die Dichtfunktion des elastomeren Körpers von der Haltefunktion. Der elastomere Körper kann gegen die Halteeinrichtung gepresst werden, so dass er sich noch besser radial nach innen und nach außen ausdehnen kann und so die Dichtigkeit verbessert wird.

Vorzugsweise ist der elastomere Körper aus einem volumenkonstanten Material gebildet. Bei einem volumenkonstanten Material führt eine Kompression in eine Richtung nicht oder nicht wesentlich zu einer Verminderung des Volumens, sondern zu einer Ausdehnung des Körpers in andere Richtungen. Da im vorliegenden Fall eine Kompression praktisch nur parallel zur Durchtrittsrichtung erfolgen kann, bleiben für die Ausdehnung nur die beiden Richtungen radial nach außen und radial nach innen, also zum Rand der Austrittsöffnung und zum Hilfselement, übrig.

Der elastomere Körper weist an der Austrittsöffnung einen größeren Durchmesser auf als im Innern des Gehäuses. Dies hat den Vorteil, dass die Abdichtung bereits im Innern des Gehäuses erfolgen kann. Wenn dort ein Druck auf den elastomeren Körper ausgeübt wird, dann wird dieser Druck praktisch unmittelbar dazu umgesetzt, dass sich der elastomere Körper dicht an die Umfangswand der Austrittsöffnung und dicht an das Hilfselement anlegt.

Vorzugsweise weist der elastomere Körper einen konusartig verlaufenden Vergrößerungsabschnitt auf. Dieser konusartig verlaufende Vergrößerungsabschnitt kann verwendet werden, um beim Einsetzen des elastomeren Körpers bereits eine gewisse radiale Vorspannung zu erzeugen, so dass der in die Austrittsöffnung eingesetzte elastomere Körper bereits mit einer gewissen Vorspannung sowohl radial nach außen abdichtet, indem er dicht an der Umfangswand der Austrittsöffnung anliegt, als auch radial nach innen, indem er dicht am Hilfselement anliegt.

Auch ist von Vorteil, dass der elastomere Körper eine Stufe aufweist. Eine Stufe verhindert, dass der elastomere Körper zu weit in das Gehäuse eingesetzt wird.

Bevorzugterweise ist die Austrittsöffnung in einem Austrittsstutzen angeordnet. Damit steht im Gehäuse eine ausreichende Länge zur Verfügung, um den elastomeren Körper aufzunehmen, ohne dass das Gehäuse ansonsten mit zuviel Material ausgebildet sein muss. Der Austrittsstutzen kann beispielsweise einen rohrartigen Abschnitt des Gehäuses bilden.

Vorzugsweise weist der Austrittsstutzen parallel zur Durchtrittsrichtung eine Länge auf, die größer als die Länge des elastomeren Körpers parallel zur Durchtrittsrichtung ist. Der elastomere Körper stört dann nicht einen Durchgangskanal durch den Verbinder, so dass der Durchstrom des durch die Fluidleitung fließenden Fluids durch den elastomeren Körper nicht behindert wird.

Vorzugsweise weist die Halteeinrichtung einen Pressring auf. Der Pressring ist in der Lage, flächig auf den elastomeren Körper zu wirken, so dass er die auf den elastomeren Körper wirkenden Drücke aufnehmen kann. Damit hält der Pressring den elastomeren Körper sicher im Gehäuse des Verbinders und dient als Widerlager für die Kompression des elastomeren Körpers durch die Drücke im Innern der Fluidleitung.

Vorzugsweise ist der Pressring durch eine Hinterschneidung in der Austrittsöffnung gehalten. Der Pressring kann beispielsweise in die Austrittsöffnung eingedrückt werden, wobei die Austrittsöffnung sich beim Eindrücken kurzzeitig vergrößert, dann aber wieder radial einwärts federt. Der Pressring ist dann ohne zusätzlichen Aufwand sicher im Gehäuse gehalten.

Vorzugsweise weist die Halteeinrichtung eine Kappe auf, die die Austrittsöffnung zumindest teilweise überdeckt und die auf das Gehäuse aufgeschraubt, aufgeprellt, aufgepresst, aufgeklebt oder aufgeschweißt ist. Wenn die Kappe auf das Gehäuse aufgeschraubt ist, benötigt man in der Kappe und am Gehäuse ein entsprechendes Schraubgewinde. Beim Aufprellen ist eine andere Verbindungsgeometrie erforderlich, die einen Formschluss erlaubt. Hierbei muss die Kappe kurzzeitig radial aufgeweitet werden können und dann über die Verbindungsgeometrie zurückfedern. Wenn die Kappe aufgepresst ist, hält sie im Grunde durch Reibung. Beim Aufkleben oder Aufschweißen ergibt sich ein Stoffschluss zwischen der Kappe und dem Gehäuse. In allen Fällen ist die Kappe in der Lage, die notwendigen Haltekräfte aufzubringen, damit der elastomere Körper zum einen nicht aus dem Gehäuse herausgedrückt wird, wenn in der Fluidleitung ein erhöhter Druck herrscht, und zum anderen ein Widerlager zu bilden, um die gewünschte Kompression des elastomeren Körpers herbeizuführen. Die Kappe kann mit oder ohne Pressring verwendet werden.

Vorzugsweise weist die Halteeinrichtung eine Umspritzung des Gehäuses auf. Wenn das Hilfselement aus der Austrittsöffnung herausgeführt und der elastomere Körper in die Austrittsöffnung eingesetzt worden ist, dann kann man den Verbinder beispielsweise in eine Spritzgussform einlegen und einen Kunststoff einspritzen, um die Umspritzung zu erzeugen. Auch dies ist eine Möglichkeit, um den elastomeren Körper (mit oder ohne Pressring) in der Austrittsöffnung zu halten und die für die Kompression notwendigen Gegenkräfte aufzubringen.

Hierbei ist bevorzugt, dass die Umspritzung das Gehäuse auf der der Austrittsöffnung gegenüberliegenden Seite umfasst. Damit ergibt sich ein Formschluss des umspritzenden Kunststoffs, der den elastomeren Körper auch gegen größere Kräfte in der Austrittsöffnung festhält.

Bevorzugterweise überdeckt die Umspritzung den Anschlussstutzen zumindest teilweise. Man kann die Umspritzung dann dazu verwenden, auch ein auf den Anschlussstutzen aufgeschobenes Rohr von außen zu überdecken, so dass das Rohr noch besser auf dem Anschlussstutzen gehalten wird.

Vorzugsweise ist das Hilfselement durch ein elektrisches Kabel gebildet. Ein derartiges elektrisches Kabel kann beispielsweise elektrische Energie zu einer Heizeinrichtung führen, die in der Fluidleitung angeordnet ist. Das elektrische Kabel kann auch verwendet werden, um Messdaten von einem Sensor nach außen zu leiten, der in der Fluidleitung angeordnet ist. Vielfach ist es bei Verwendung eines elektrischen Kabels günstig, zwei Adern durch getrennte Durchtrittsöffnungen im elastomeren Körper zu führen, um die Dichtigkeit mit hoher Zuverlässigkeit sicherzustellen.

Die Erfindung betrifft auch eine Fluidleitung mit einem Verbinder, wie er oben beschrieben worden ist, und einem auf den Anschlussstutzen aufgebrachten Rohr. Das Hilfselement, beispielsweise das elektrische Kabel, kann dann durch den Verbinder auch weit in das Innere des Rohres geführt werden.

Die Erfindung wird im Folgenden anhand von bevorzugten Ausführungsbeispielen in Verbindung mit der Zeichnung beschrieben. Hierin zeigen:
- Fig. 1: einen Längsschnitt durch eine erste Ausführungsform eines Verbinders,
- Fig. 2: einen Längsschnitt durch eine zweite Ausführungsform eines Verbinders,
- Fig. 3: den Verbinder von Fig. 1 in perspektivischer Darstellung,
- Fig. 4: eine abgewandelte Ausführungsform gegenüber Fig. 3 und
- Fig. 5: einen Längsschnitt durch eine vereinfachte Ausführungsform eines Verbinders.

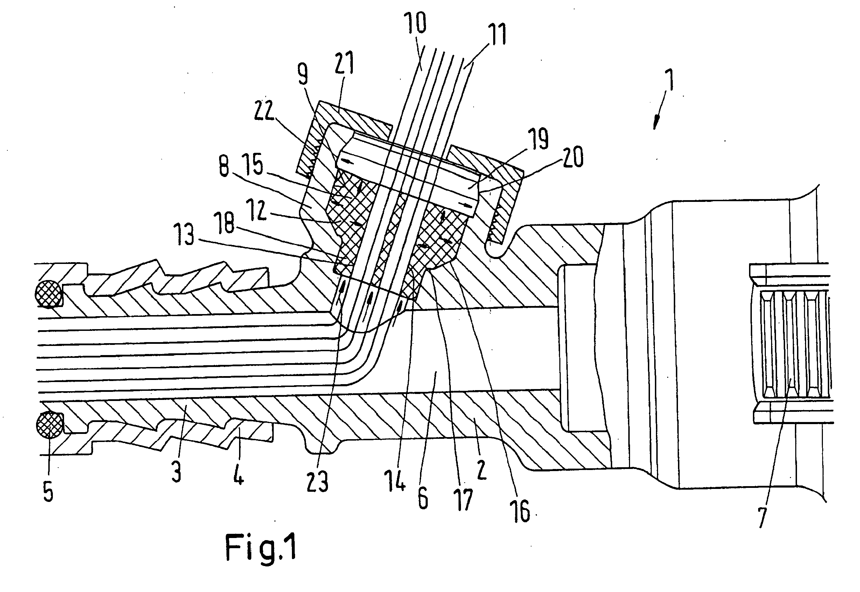

Fig. 1 zeigt einen Verbinder 1 für eine Fluidleitung mit einem Gehäuse 2, das einen Anschlussstutzen 3 aufweist. Auf den Anschlussstutzen 3 ist ein Rohr 4 aufgeschoben. Nicht näher dargestellte Mittel können vorgesehen sein, um das Rohr 4, das auch als flexible Leitung oder Schlauch ausgebildet sein kann, auf dem Anschlussstutzen 3 festzuhalten. Ein Dichtring 5 sorgt für eine zusätzliche Abdichtung zwischen dem Anschlussstutzen 3 und dem Rohr 4. Der Anschlussstutzen 3 weist eine "Tannenbaum"-Struktur auf.

Durch den Anschlussstutzen 3 verläuft ein Durchgangskanal 6 bis zu dem dem Anschlussstutzen 3 entgegengesetzten Ende des Gehäuses 2. Dort ist eine nur schematisch dargestellte Verbindungsgeometrie 7 vorgesehen, mit der der Verbinder 1 mit einem nicht näher dargestellten Gegenelement verbunden werden kann. Bei dem Gegenelement handelt es sich z.B. um den Stutzen eines Tanks oder einer Pumpe. Die Verbindungsgeometrie 7 soll dabei eine mechanisch belastbare und dichte Verbindung sicherstellen. Für die vorliegende Erfindung ist ihre genaue Ausbildung von untergeordneter Wichtigkeit.

Das Gehäuse 2 weist einen Austrittsstutzen 8 auf, der eine Austrittsöffnung 9 umschließt. Durch die Austrittsöffnung 9 sind zwei Adern 10, 11 einer elektrischen Leitung geführt, die sich durch den Durchgangskanal 6 hindurch in das Innere des Rohres 4 erstrecken. Die Adern 10, 11 der elektrischen Leitung können beispielsweise zu einem Sensor führen, mit dessen Hilfe Temperatur, DrucK, Stromungsgeschwindigkeit. Oder der gleichen eines Fluids erfasst werden können, dass durch das Rohr 4 und den Verbinder 1 strömt. Die Adern 10, 11 können auch dazu verwendet werden, um elektrische Leistung zu einer nicht näher dargestellten Heizeinrichtung zu leiten, die im Innern des Rohres 4 angeordnet ist.

Um die Adern 10, 11 aus dem Innern des Gehäuses 2 abgedichtet nach außen führen zu können, ist im Austrittsstutzen 8 ein elastomerer Körper 12 vorgesehen, der eine Dichtungsfunktion wahrnimmt.

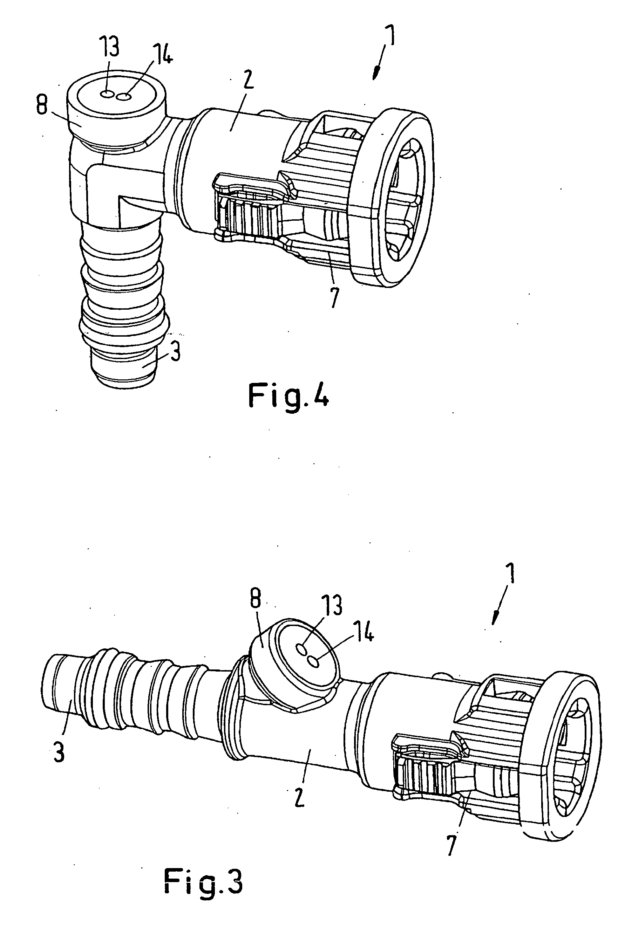

Der elastomere Körper 12 weist für jede Ader 10, 11 eine Durchgangsöffnung 13, 14 auf (siehe auch Fig. 3). Um die nachfolgende Erläuterung zu vereinfachen, wird die Längsrichtung der Durchgangsöffnungen 13, 14 auch als "Durchtrittsrichtung" bezeichnet. Die Durchtrittsrichtung stimmt im vorliegenden Fall überein mit einer Achse des Austrittsstutzens 8.

Der elastomere Körper 12 weist einen zylinderförmigen Abschnitt 15 auf, der dem vom Gehäuse 2 abgewandten Ende des Austrittsstutzens 8 benachbart ist. Der zylinderförmige Abschnitt 15 geht über in einen konusförmigen Abschnitt 16. Der konusförmige Abschnitt 16 ist gefolgt von einer kleinen Stufe 17, an die sich ein weiterer zylinderförmiger Abschnitt 18 anschließt. Der zylinderförmige Abschnitt 18 hat einen kleineren Durchmesser als der zylinderförmige Abschnitt 15.

Solange der elastomere Körper 12 sich außerhalb des Austrittsstutzens 8 befindet, hat er ein kleines übermaß jedenfalls im Bereich des zylinderförmigen Abschnitts 15 mit dem größeren Durchmesser. Der elastomere Körper 12 wird zur Montage im Verbinder 1 über die beiden Adern 10, 11 geschoben, die aus der Austrittsöffnung 9 herausragen, und dann in die Austrittsöffnung 9 hineingedrückt. Der konusförmige Abschnitt 16 erleichtert das Eindrücken des elastomeren Körpers 12 in den Austrittsstutzen 8. Der elastomere Körper wird bei diesem Eindrücken leicht radial komprimiert, also senkrecht zur Durchtrittsrichtung, so dass er sich dicht an die Umfangswand der Austrittsöffnung 9 anlegt. Aufgrund der radialen Kompression wird er sich auch dicht an die Umfangsflächen der Adern 10, 11 anlegen. Die Stufe 17 verhindert, dass der elastomere Körper 12 zu weit in den Austrittsstutzen 8 hineingedrückt wird.

Um den elastomeren Körper 12 im Austrittsstutzen 8 zu halten, ist ein Pressring 19 vorgesehen, der hinter einer Hinterschneidung 20 eingerastet werden kann. Der Pressring 19 weist ebenfalls zwei Durchgangsöffnungen für die beiden Adern 10, 11 auf.

Der Pressring 19 wird zusätzlich zu dem Formschluss, der durch die Hinterschneidung 20 gebildet wird, auch noch von einer Kappe 21 im Austrittsstutzen 8 festgehalten. Die Kappe 21 kann, wie dargestellt, ein Schraubgewinde 22 aufweisen, mit dem sie am Austrittsstutzen 8 befestigt ist. Alternativ dazu kann man auch andere Befestigungsarten verwenden. So kann die Kappe 21 auch lediglich auf den Austrittsstutzen 8 aufgepresst sein, also unter Reibschluss dort halten. Man kann einen Formschluss erzeugen, indem die Kappe 21 auf den Austrittsstutzen 8 aufgeprellt wird. Vorsprünge und Vertiefungen, die zu diesem Zweck notwendig sind, sind in Fig. 1 nicht dargestellt. Man kann die Kappe 21 auch mit dem Austrittsstutzen 8 verkleben oder verschweißen, also eine stoffschlüssige Verbindung bilden.

Wie oben bereits ausgeführt, ergibt sich durch das Einpressen des elastomeren Körpers 12 in den Austrittsstutzen 8 bereits eine gewisse Dichtigkeit, die allerdings nicht unbedingt für die im Durchgangskanal 6 herrschenden Drücke ausreicht. Diese Drücke sind durch Pfeile 23 dargestellt.

Das Material des elastomeren Körpers 12 hat nun die Eigenschaft, bei einer Kompression in eine Richtung in andere zur Verfügung stehende Richtungen zu expandieren. Im Extremfall kann der elastomere Körper 12 aus einem volumenkonstanten Material gebildet sein, bei dem eine Kompression in eine Richtung nicht zu einer VerMinderung des Volumens führt, sondern die entsprechende Verkürzung in diese Richtung zu einer Vergrößerung der Abmaße in die anderen Richtungen führen würde.

Im vorliegenden Fall führt dies zu folgendem Ergebnis: Wenn der elastomere Körper 12 durch den Druck 23 im Innern des Gehäuses 2 beaufschlagt wird, wird er gegen den Pressring 19 gedrückt, was zunächst einmal zu einer Kompression in Durchtrittsrichtung führt. Diese Kompression führt wiederum zu einer Expansion in radialer Richtung, also senKrecht zur Durchtrittsrichtung. Mit anderen Worten versucht der elastomere Körper 12 sich radial nach außen auszudehnen, wodurch er sich noch enger an die Umfangswand der Austrittsöffnung 9 legt. Gleichzeitig wird der elastomere Körper 12 auch radial nach innen ausgedehnt, wodurch er sich dichter an die Umfangsflächen der Adern 10, 11 legt. Je dichter der elastomere Körper 12 an den entsprechenden Gegenflächen anliegt, d.h. je größer die Kräfte sind, mit denen er an diesen Gegenflächen anliegt, desto besser ist die Dichtigkeit. Damit steigt die Dichtigkeit praktisch mit dem Druck im Innern des Gehäuses 2 an, so dass auch bei höheren Drücken im Innern des Gehäuses eine ausreichende Dichtigkeit gegeben ist.

Der Austrittsstutzen 8 hat eine Länge parallel zur Durchtrittsrichtung, die größer ist als die Länge des elastomeren Körpers 12 parallel zur Durchtrittsrichtung. Damit wird verhindert, dass der elastomere Körper 12 bis in den Durchgangskanal 6 vorsteht und die Strömung eines Fluids durch den Durchgangskanal 6 behindert.

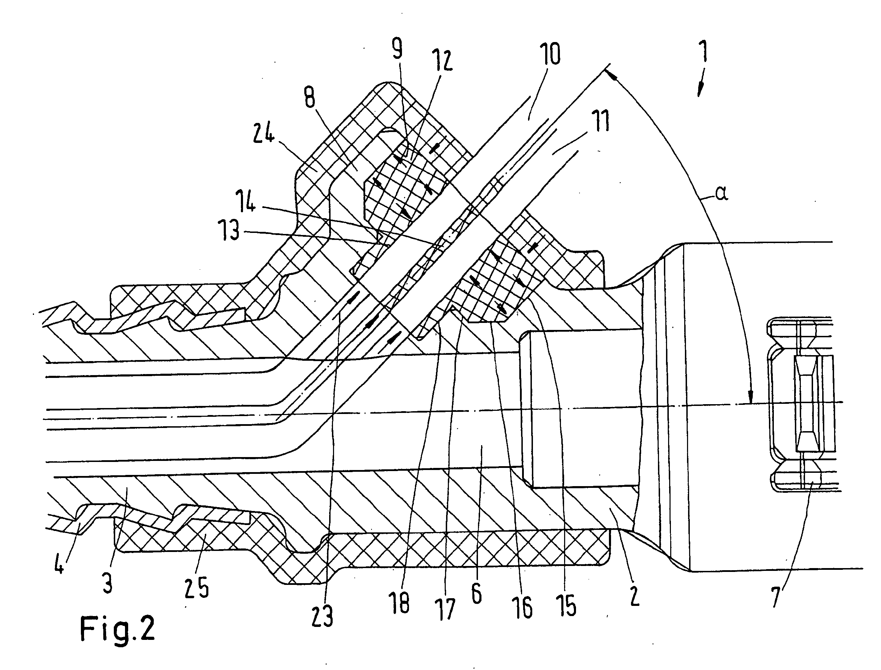

Fig. 2 zeigt eine abgewandelte Ausführungsform, bei der gleiche und funktionsgleiche Teile mit den gleichen Bezugszeichen versehen sind.

Auch hier steht der Austrittsstutzen 8 unter einem Winkel α zum Durchgangskanal 6. Der Winkel α kann beispielsweise im Bereich von 20° bis 80° liegen.

Bei der Ausgestaltung nach Fig. 2 reicht der elastomere Körper 12 bis zum Ende des Austrittsstutzens 8. Um den elastomeren Körper 12 in der Austrittsöffnung 9 zu halten, ist das Gehäuses, 2 des Verbinders 1 mit einer Umspritzung 24 versehen. Die Umspritzung 24 überdeckt den elastomeren Körper 12 vollständig bis auf die Flächenbereiche, durch die die Adern 10, 11 treten.

Die Umspritzung 24 überdeckt auch den Anschlussstutzen 3 und damit einen Teil des Rohres 4, das auf den Anschlussstutzen 3 aufgeschoben ist. Die Umspritzung 24 umgibt das Gehäuse 2 in Umfangsrichtung um den Durchgangskanal 6, weist also einen Abschnitt 25 auf, der auf der Seite des Gehäuses 2 angeordnet ist, die dem Austrittsstutzen 8 gegenüberliegt. Damit wird der elastomere Körper 12 auch durch einen Formschluss im Gehäuse 2 gehalten.

Man kann die Umspritzung auch zusammen mit einem Pressring 19 verwenden. Man kann die Umspritzung 24 auch zusammen mit einer Kappe 21 verwenden. In den meisten Fällen wird dies jedoch nicht notwendig sein.

Fig. 3 zeigt den Verbinder 1 nach Fig. 1 von außen (ohne Rohr 4). Es ist zu erkennen, dass der Anschlussstutzen 3 und die Verbindungsgeometrie 7 sozusagen auf einer geraden Linie liegen, so dass der Durchgangskanal keinerlei Umlenkabschnitte oder dergleichen enthält. Ein derartiger Verbinder wird auch als "0°-Verbinder" bezeichnet. Der Austrittsstutzen 8 steht unter einem Winkel im Bereich von 20° bis 80° zum Durchgangskanal 6.

Fig. 4 zeigt eine abgewandelte Ausführungsform, bei der gleiche und funktionsgleiche Elemente mit den gleichen Bezugszeichen versehen sind.

Der in Fig. 4 dargestellte Verbinder wird auch als "90°-Verbinder" bezeichnet, weil der Anschlussstutzen 3 und die Verbindungsgeometrie 7 unter einem Winkel von 90° zueinander stehen.

In diesem Fall kann der Austrittsstutzen 8 die gleiche Achse wie der Anschlussstutzen 3 aufweisen, so dass die Adern 10, 11 geradlinig durch die Durchgangsöffnungen 13, 14 geführt werden können.

Anstelle der Adern 10, 11 lassen sich natürlich auch noch andere Hilfselemente verwenden.

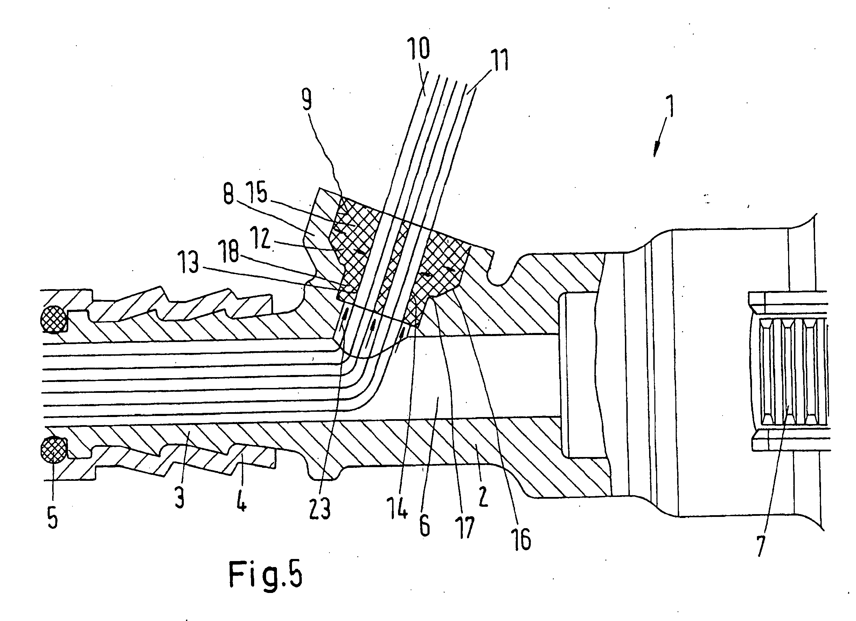

Fig. 5 zeigt eine gegenüber Fig. 1 und 2 vereinfachte Ausgestaltung. Elemente, die denen der Fig. 1 entsprechen, sind mit den gleichen Bezugszeichen versehen.

Der elastomere Körper 12 ist ohne Halteeinrichtung in die Austrittsöffnung 9 des Austrittsstutzens 8 eingesetzt. Um die notwendigen Haltekräfte aufzubringen, kann es vorteilhaft sein, wenn der elastomere Körper 12 bei diesem Einsetzen in radialer Richtung stärker komprimiert wird, als bei der Ausgestaltung nach Fig. 1. Wenn sich der elastomere Körper 12 dann nach dem Einsetzen ausdehnen möchte, hält er mit entsprechend großen Reibungskräften in der Austrittsöffnung 9. Gegebenenfalls kann es vorteilhaft sein, die Austrittsöffnung 9 mit einer etwas aufgerauten oder strukturierten Oberfläche zu versehen, die zwar ein Einsetzen des elastomeren Körpers 12 in den Austrittsstutzen 8 erlaubt, ein Herausdrücken des elastomeren Körpers aus dem Austrittsstutzens 8 jedoch erschwert.

Auch in diesem Fall führen die Kräfte, die von dem erhöhten Druck innerhalb des Gehäuses 2 hervorgerufen werden, zu einer entsprechenden Kraft auf den elastomeren Körper 12. Diese Kraft komprimiert den elastomeren Körper 12 in Durchtrittsrichtung, weil er im Austrittsstutzen 8 gehalten ist. Zumindest im Bereich des zylindrischen Abschnitts 18 mit kleinerem Durchmesser ergibt sich dann die gewünschte radiale Kompression mit der entsprechenden Abdichtung.

## Patentansprüche

1. Verbinder (1) für eine Fluidleitung mit einem Gehäuse (2), das einen Anschlussstutzen (3), der mit einem Rohr (4) verbindbar ist, und eine Verbindungsgeometrie (7), die mit einem Gegenelement verbindbar ist, aufweist, wobei das Gehäuse (2) eine Austrittsöffnung (9) aufweist, durch die mindestens ein Hilfselement (10, 11) aus dem Gehäuse (2) nach außen geführt ist, wobei das Hilfselement (10, 11) durch einen elastomeren Körper (12) geführt ist **dadurch gekennzeichnet, dass**, der elastomere Körper (12) sich bei einer Druckbeaufschlagung parallel zur Durchtrittsrichtung des Hilfselements (10, 11) durch den elastomeren Körper (12) senkrecht zur Durchtrittsrichtung ausdehnt, wobei der elastomere Körper (12) an der Austrittsöffnung (9) einen größeren Durchmesser aufweist als im Innern des Gehäuses (2) und der elastomere Körper (12) eine Stufe (17) aufweist.

2. Verbinder nach Anspruch 1, **dadurch gekennzeichnet, dass** der elastomere Körper (12) durch eine Halteeinrichtung in der Austrittsöffnung (9) gehalten ist

3. Verbinder nach Anspruch 1 oder 2, **dadurch gekennzeichnet, dass** der elastomere Körper (12) aus einem volumenkonstanten Material gebildet ist.

4. Verbinder nach einem der Ansprüche 1 bis 3, **dadurch gekennzeichnet, dass** der elastomere Körper (12) einen konusartig verlaufenden Vergrößerungsabschnitt (16) aufweist.

5. Verbinder nach einem der Ansprüche 1 bis 4, **dadurch gekennzeichnet, dass** die Austrittsöffnung (9) in einem Austrittsstutzen (8) angeordnet ist.

6. Verbinder nach Anspruch 5, **dadurch gekennzeichnet, dass** der Austrittsstutzen (8) parallel zur Durchtrittsrichtung eine Länge aufweist, die größer als die Länge des elastomeren Körpers (12) parallel zur Durchtrittsrichtung ist.

7. Verbinder nach einem der Ansprüche 1 bis 6, **dadurch gekennzeichnet, dass** die Halteeinrichtung einen Pressring (19) aufweist.

8. Verbinder nach Anspruch 7, **dadurch gekennzeichnet, dass** der Pressring (19) durch eine Hinterschneidung (20) in der Austrittsöffnung (9) gehalten ist.

9. Verbinder nach einem der Ansprüche 1 bis 8, **dadurch gekennzeichnet, dass** die Halteeinrichtung eine Kappe (21) aufweist, die die Austrittsöffnung (9) zumindest teilweise überdeckt und die auf das Gehäuse (2) aufgeschraubt, aufgeprellt, aufgepresst, aufgeklebt oder aufgeschweißt ist.

10. Verbinder nach einem der Ansprüche 1 bis 9, **dadurch gekennzeichnet, dass** die Halteeinrichtung eine Umspritzung (24) des Gehäuses (2) aufweist.

11. Verbinder nach Anspruch 10, **dadurch gekennzeichnet, dass** die Umspritzung (24) das Gehäuse (2) auf der der Austrittsöffnung (9) gegenüberliegenden Seite umfasst.

12. Verbinder nach Anspruch 10 oder 11, **dadurch gekennzeichnet, dass** die Umspritzung (24) den Anschlussstutzen (3) zumindest teilweise mit überdeckt.

13. Verbinder nach einem der Ansprüche 1 bis 12, **dadurch gekennzeichnet, dass** das Hilfselement durch ein elektrisches Kabel (10, 11) gebildet ist.

14. Fluidleitung mit einem Verbinder (1) nach einem der Ansprüche 1 bis 13 und einem auf den Anschlussstutzen (3) aufgebrachten Rohr (4).

## Claims

1. Connector (1) for a fluid line comprising a housing (2) having a pipe connection (3) connectable to a pipe (4), and a connection geometry (7) connectable to a counter element, wherein the housing has an outlet opening (9) through which at least one auxiliary element (10,11) is guided out of the housing (2) wherein the auxiliary element (10,11) is guided through an elastic body, **characterized in that** the elastomeric body (12) expands perpendicularly to the passage direction in the event of an application of pressure parallel to the passage direction of the auxiliary element (10, 11) through the elastomeric body (12), wherein the elastomeric body (12) has a larger diameter at the outlet opening (9) than in an interior of the housing (2) and wherein the elastomeric body (12) comprises a step (17).

2. Connector according to claim 1, **characterized in that** the elastomeric body (12) is held in the outlet opening (9) by means of a holding device structured and arranged to hold.

3. Connector according to claim 1 or 2, **characterized in that** the elastomeric body (12) is formed of a constant-volume material.

4. Connector according to any of claims 1 to 3, **characterized in that** the elastomeric body (12) comprises a conically tapering enlargement section (16).

5. Connector according to any of claims 1 to 4, **characterized in that** the outlet opening (9) is arranged in an outlet connection (8).

6. Connector according to claim 5, **characterized in that** the outlet connection (8) has a length extending parallel to the passage direction that is greater than a length of the elastomeric body (12) in a direction parallel to the passage direction.

7. Connector according to any of claims 1 to 6, **characterized in that** the holding device comprises a press ring (19).

8. Connector according to claim 7, **characterized in that** the press ring (19) is held in the outlet opening (9) by means of an undercut.

9. Connector according to any of claims 1 to 8, **characterized in that** the holding device has a cap (21) that covers the outlet opening (9) at least in part and that is one of screwed, pushed, pressed, adhered or welded onto the housing (2).

10. Connector according to any of claims 1 to 9, **characterized in that** the holding device comprises an overmold (24) of the housing (2).

11. Connector according to claim 10, **characterized in that** the overmold (24) encompasses the housing (2) on a side lying opposite the outlet opening (9).

12. Connector according to claim 10 or 11, **characterized in that** the overmold (24) covers the pipe connection (3) at least in part.

13. Connector according to any of claims 1 to 12, **characterized in that** the auxiliary element (10,11) is made as an electric cable (10,11).

14. Fluid line comprising a connector (1) according to any of claims 1 to 13 and a pipe (4) attached to the pipe connection (3).

## Revendications

1. Raccord (1) pour une conduite de fluide avec un boîtier (2), qui présente un embout de raccordement (3), qui peut être relié à un tube (4), et une géométrie de raccordement (7), qui peut être raccordée à un contre-élément, dans lequel le boîtier (2) présente une ouverture de sortie (9) à travers laquelle est guidé vers l'extérieur depuis le boîtier (2) au moins un élément auxiliaire (10, 11), dans lequel l'élément auxiliaire (10, 11) est guidé par un corps élastomère (12), **caractérisé en ce que** le corps élastomère (12) se dilate, lors d'une sollicitation à la pression parallèlement à la direction de passage de l'élément auxiliaire (10, 11) à travers le corps élastomère, perpendiculairement à l'ouverture de passage, dans lequel le corps élastomère (12) présente, au niveau de l'ouverture de sortie (9), un diamètre plus grand qu'à l'intérieur du boîtier (2) et le corps élastomère (12) présente un gradin (17).

2. Raccord selon la revendication 1, **caractérisé en ce que** le corps élastomère (12) est maintenu par un dispositif de support dans l'ouverture de sortie (9).

3. Raccord selon la revendication 1 ou la revendication 2, **caractérisé en ce que** le corps élastomère (12) est formé d'un matériau à volume constant.

4. Raccord selon l'une quelconque des revendications 1 à 3, **caractérisé en ce que** le corps élastomère (12) présente une section d'agrandissement (16) s'étendant en forme de cône.

5. Raccord selon l'une quelconque des revendications 1 à 4, **caractérisé en ce que** l'ouverture de sortie (9) est ménagée dans un embout de sortie (8).

6. Raccord selon la revendication 5, **caractérisé en ce que** l'embout de sortie (8) présente parallèlement à la direction de passage une longueur qui est plus grande que la longueur du corps élastomère (12) parallèlement à la direction de passage.

7. Raccord selon l'une quelconque des revendications 1 à 6, **caractérisé en ce que** le dispositif de support présente un anneau de serrage (19).

8. Raccord selon la revendication 7, **caractérisé en ce que** l'anneau de serrage (19) est maintenu par une contre-dépouille (20) dans l'ouverture de sortie (9).

9. Raccord selon l'une quelconque des revendications 1 à 8, **caractérisé en ce que** le dispositif de support présente un chapeau (21) qui recouvre au moins en partie l'ouverture de sortie (9) et qui est vissé, serti, pressé, collé ou soudé sur le boîtier (2).

10. Raccord selon l'une quelconque des revendications 1 à 9, **caractérisé en ce que** le dispositif de support présente un gainage par extrusion (24) du boîtier (2).

11. Raccord selon la revendication 10, **caractérisé en ce que** le gainage par extrusion (24) enserre le boîtier (2) du côté opposé à l'ouverture de sortie (9).

12. Raccord selon la revendication 10 ou la revendication 11, **caractérisé en ce que** le gainage par extrusion (24) recouvre au moins en partie l'embout de raccordement (3).

13. Raccord selon l'une quelconque des revendications 1 à 12, **caractérisé en ce que** l'élément auxiliaire est formé par un câble électrique (10, 11).

14. Conduite de fluide équipée d'un raccord (1) selon l'une quelconque des revendications 1 à 13 et d'un tube (4) monté sur l'embout de raccordement (3).
